# EUROPEAN PATENT APPLICATION

(11) **EP 1 838 059 A1**
(43) Date of publication of application: **26.09.2007**
(21) Application number: 04802491.3
(22) Date of filing: 21.12.2004
(51) Int. Cl.: H04L 12/64, H04L 12/56, H04L 12/28

(54) **A SWITCHING SYSTEM FOR FIXED AND MOBILE COMMUNICATION NETWORK AND IMPLEMENTING METHOD THEREOF**

(71) Applicant: ZTE Corporation, Nanshan District, Shenzhen Guangdong 518057 (CN)
(72) Inventor: YANG, Peilin, ZTE Plaza, Shenzhen Guangdong518057 (CN); XU, Xiaokun, ZTE Plaza, Shenzhen, Guangdong 518057 (CN); HONG, Jun, ZTE Plaza, Shenzhen, Guangdong 518057 (CN)
(74) Representative: Gymer, Keith Francis
(86) International application number: PCT/CN2004/001478
(87) International publication number: WO 2006/066442

(57) **Abstract**

The present invention discloses a switching system for fixed and mobile communication networks and implementing method thereof. The system includes a wired access network connected with fixed terminals and a wireless access network connected with wireless terminals, wherein it also includes a controller for controlling the establishment of achieving call between said fixed terminal users and said mobile terminal users; in said wired access network, said fixed terminals register to said controller via a packet switching network, or directly connect to an integrated access device or an access gateway device and then register to said controller via a packet switching network; in said wireless access network, said mobile terminals register to said controller via the wireless access network, or said mobile terminals first connect to a packet switching network by the manner of wireless access and then register to said controller via said packet switching network.

## Description

### Technical Field

The present invention relates to a technology to achieve integration of fixed and mobile networks in communication fields, and more specifically to a switching system for fixed and mobile communication networks and implementing method thereof.

### Background Art

The current switching systems in the telecommunication field are generally converged at fixed network switching systems and mobile network switching systems, each of which appears as an independent system in an operating environment, supporting only the fixed switching networks or the mobile switching networks. Nowadays, however, many domestic and foreign operators are full-service providers who provide both mobile and fixed services. For the providers, they need to spend money not only on repetitive establishment of fixed networks and mobile networks, but also on the network management and maintenance of fixed networks and mobile networks. Therefore, it is desirable to provide a core network system supporting operations of both fixed switching systems and mobile switching systems, which will reduce not only the operators' investment cost but also the cost of network management and maintenance.

United States Patent Application No. 6,104,928, entitled "Dual network integration scheme", disclosed a technology of accessing wired communication network in a mobile network. In this patent, the mobile network is similar to the present GSM network, while its wired network mainly includes fixed terminals and a wired access base station system which is responsible for storing associated information of the fixed terminals. The mobile switching center (MSC) of the operating network does not need to know the user is a fixed user or a mobile user, just connect the related call to the associated wired or wireless base station so that the call to a mobile or fixed user can be achieved. The main implementation of this dual network integration scheme of this patent is focused on the wired access base station system. The advantage of this integration scheme is that the fixed and mobile networks can be integrated in the former wireless communication network without changing MSC, and the disadvantage is that it needs to deploy a wired access base station system for each user, which means the cost of investment is very high when there are few and dispersed users.

United States Patent Application No. 5,633,873, entitled "Combined fixed and mobile radio communication system and method", also disclosed a method for combining fixed network and mobile network. For the access method of mobile users, it is a complete wireless communication system; while for the fixed users, they connect to the transceiver ofthe base station of the wireless communication system via a multi-subscriber unit (MSU) by wireless method, to finally achieve the combination of the wired and wireless networks. It can be said that this combination scheme has achieved the access ofthe fixed users, yet it is not a real fixed access but a fixed access realized by fixing the wireless access, whose disadvantage is that the base station sub-system of the mobile communication network should be changed and the number of MSU devices should be increased.

United States Patent Application No. 5,564,072, entitled "Fixed cellular communication system", and Chinese Patent Application No. 94116510.8, entitled "Fixed cellular communication system", also disclosed a method of fixed cellular communication system. The fixed user terminals interconnect with the base station subsystem of the cellular communication system by wireless method to communicate, meanwhile, it communicates with at least one base station of the wireless system (WS) with the help of cable communication control and interface devices, and is adapted between two systems to provide communication service to many wireless terminals, to finally realize the integration of wireless terminals and the wired terminals. The advantage of this integration is similar to that of the United States Application No. 5,633,873, and it also offers an access method of wireless communication system. Its disadvantage is the same as that of the United States Application No. 5,633,873, moreover, and many devices should be added.

Integrations of fixed network and mobile network offered in the foregoing patents are integrations which change the base station subsystem or fix the wireless access to achieve the integration of fixed network and mobile network. These integrations are offered in the environment at that time, and concentrate efforts in base station subsystem, which does not represent the developing trend of the integration of fixed network and mobile network.

### Summary of the Invention

The present invention solves the technical problem by offering a switching system for fixed and mobile communication networks and an implementing method thereof.

In order to achieve this object, the present invention offers a switching system which is used in fixed and mobile communication networks and includes a wired access network connected with fixed terminals and a wireless access network connected with wireless terminals, and which is characterized in that, the system also includes a controller to control the establishment of calls between said fixed terminal users and said mobile terminal users; in said wired access network, said fixed terminals register to said controller via a packet switching network, or directly connect to an integrated access device or access gateway device first and then register to said controller via the packet switching network; in said wireless access network, said mobile terminals register to said controller via a wireless access network, or connect to the packet switching network by wireless method first and then register to said controller via the packet switching network.

The above-mentioned switching system is characterized in that: said controller includes one or more control devices and at least one subscriber server, said subscriber servers connects with said control devices.

The above-mentioned switching system is characterized in that: the system also includes one or more gateway devices to carry a media stream, and said gateway devices connect with said controller, packet switching network and wireless access network respectively.

The above-mentioned switching system is characterized in that: said wireless access network includes a base station controller and a base station, and said wireless terminals connects to said controller or said packet switching network via said base station followed by said base station controller.

In order to better achieve this object, the present invention also offers an implementing method ofthe switching system used in fixed and mobile communication networks, and this method is suitable for a wired access network connected with fixed terminals and a wireless access network connected with wireless terminals, which is characterized in that, a controller is mounted to control the establishment of a call between said fixed terminal user and said mobile terminal user; fixed terminals in the wired access network register to said controller via a packet switching network, or directly connect to an integrated access device or access gateway device first and then register to said controller via the packet switching network; meanwhile, mobile terminals in the wireless access network register to said controller via a wireless access network, or connect to the packet switching network by wireless method first and then register to said controller via the packet switching network.

The above-mentioned method is characterized in that: one or more gateway devices are mounted to carry the a media stream; and said gateway devices connect with said controller, packet switching network and the wireless access network respectively.

The above-mentioned method is characterized in that: the method further includes the following steps: step 1, a mobile terminal user sends a call to the wireless access network via a wireless interface, and after the wireless access network receives the call, it will transfer the call directly or via the packet switching network to said controller; step 2, after said controller receives the call request, it will analyze the called user and determine that the called user is a fixed user in the network; step 3, said controller sends the call to the called user via said wired access network to establish the call; step 4, the called user sends a call response to the call user via said controller; step 5, a carrying channel is established between the caller and the called, or a media stream is established between the caller and the called via the gateway devices; step 6, the caller or the called releases the call. Or, the above-mentioned method is characterized in that: the method further includes the following steps: step 1, a fixed terminal user sends a call to said controller via the wired access network, or sends a call to the packet switching network via an integrated access device, after the integrated access device receives the call, it will transfer the call to said controller via the packet switching network; step 2, after said controller receives the call request, it will analyze the called and determine that the called is the next mobile terminal user in the network; step 3, said controller sends the call to the called via said wireless access network to establish the call; step 4, the called sends the call response to the caller via said controller; step 5, a channel is established between the caller and the called, or a media stream is established between the caller and the called via the gateway devices; step 6, the caller or the called releases the call.

If the foregoing scheme is applied, the present invention is able to control the mobile terminals of the wireless access network and the fixed terminals of the wired access network via a controller. For the fixed terminals, they can register to the controller via a packet switching network, and can also directly connect with an integrated access device or access gateway device first, and then register to the controller by the integrated access device or access gateway device via the packet switching network, and for the integrated access device or access gateway device, there can be one or more fixed terminals. For the mobile terminals, they can register to the controller via the wireless access network which connects with the controller via the packet switching network.

### Brief Description of the Drawings

Figure 1 is a schematic diagram of the switching system which is used in fixed and mobile communication networks in accordance with the present invention.
Figure 2 is a schematic diagram of the switching system with gateway devices which is used in fixed and mobile communication networks in accordance with the present invention.
Figure 3 is an example of the switching system which is used in fixed and mobile communication networks, in the condition that there is a gateway device.
Figure 4 is an example ofthe switching system which is used in fixed and mobile communication networks, in the condition that there are several gateway devices and control devices.
Figure 5 is an example of the switching system which is used in fixed and mobile communication networks in the condition that there is no gateway device.

Wherein the reference numerals are as follows:
100-controller
11 0-control device
120-subscriber server
200-wireless access network
2 10-base station controller
220-network clement device base station
201-mobile users (terminals)
300-wired access network
300'-packet switching network
301-fixed users (terminals)
400-gateway device
500-packet switching network

### Preferred Embodiments of the Invention

The implementation of the present invention will be described in further detail with reference to the accompanying drawings.

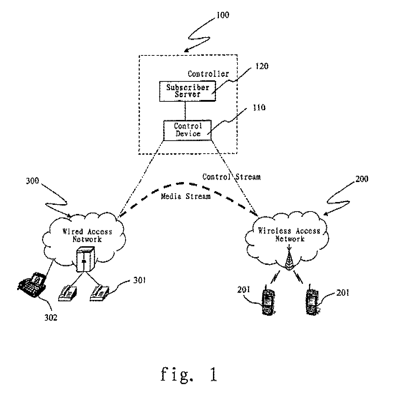

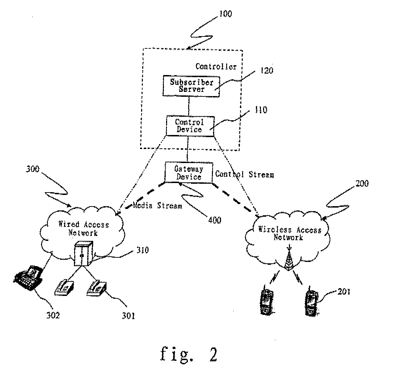

The system is a switching system used in fixed and mobile communication network, and the switching system can simultaneously support fixed network communication and mobile network communication. In the condition that there is no gateway devices, the system mainly comprises a controller 100, a wireless access network 200 and its mobile users 201, and a wired access network 300 and its fixed users 301. As shown in Figure I, terminal-to-terminal communication can be achieved between users, wherein the controller 100 includes a control device 110 and a subscriber server 120. In the condition that there are gateway devices, the system also comprises a gateway device 400 besides the network main body shown in Figure 1. As shown in Figure2, communication can be achieved between users via the gateway device 400.

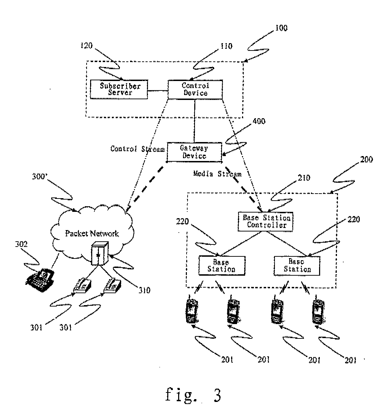

Figure 3 is an example which supports the integration of fixed network and mobile network in the condition that there is the gateway device 400. The controller 100 mainly consists of control device 110 and subscriber server 120; wireless access network mainly includes two nodes of base station controller 210 and network element device base stations 220, and the network element device base stations 220 connect with the wireless mobile users 201; the fixed users 301 directly register to the controller 100 via the packet switching network 300', or connect to the integrated access device 310, which directly register the users to the controller 100 via the packet switching network 300'.

To more intuitively understand the integration system of fixed network and mobile network, the typical procedure for a mobile user 201 calling a fixed user 301, as shown in figure 3, is illustrated first. The procedure is as follow:
Firstly, we suppose the following fundamental conditions:
   The mobile users 201 and fixed users 301 register to the domain controlled by the controller 100.
   The main working process of a mobile user 201 calling fixed user 301 can be generally described as follows:
      Step 1, a mobile user 201 establishes a call to the control device 110 via the network element device base station 220 and the base station controller 210 in the wireless access network 200;
      Step 2, after the control device 110 receives the call request established by the mobile user 201, it will analyze the called and finds out the called is a fixed user 301 of the integrated access device 310 in the controlled domain, therefore, it calls the fixed user 301 via the integrated access device 310 and informs the gateway device 400;
      Step 3, the fixed user 301 sends a call response to the control device 110 via the integrated access device 310;
      Step4, after the control device 110 receives the call response from the fixed user 301, it will send a call response to the mobile user 201;
      Step 5, the mobile user 201 establishes a carrying channel with gateway device 400 via the network element device base station 220 and base station controller 210;
      Step 6, the gateway device 400 establishes a carrying channel with the fixed user 301 via the integrated access device 310;
      Step 7, the call between the mobile user 201 and the fixed user 301 is achieved;
      Step8, after the communication between the mobile user 201 and the fixed user 301 is over, the call is released.

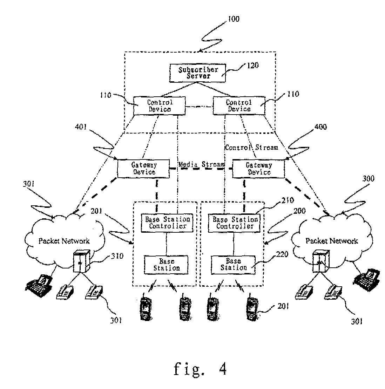

Figure 4 is an example of the switching system which has several gateway devices and control devices and is used in fixed and mobile communication networks. The difference between Figure 3 and Figure 4 is that the switching system shown in Figure 4 includes several control devices and gateway devices, yet the specific procedure of Figure 4 is similar to the call procedure of Figure 3.

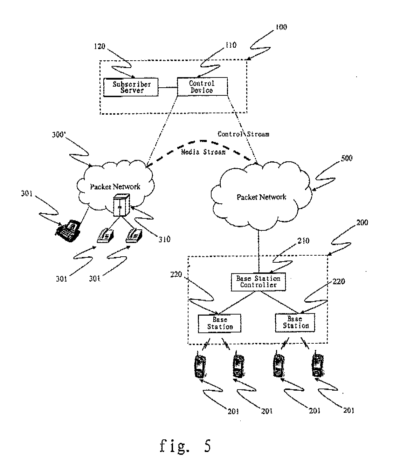

Figure 5 is an example of a switching system which is used in fixed network and mobile network in the condition that there is no gateway device. The controller 100 mainly consists of the control device 110 and the subscriber server 120; the wireless access network 200 mainly includes two nodes of the base station controller 210 and the network element device base station 220; in the wired access network 300, usually the fixed users 301 directly register to the controller 100 via the packet switching network 300', or the fixed users 301 connect to the integrated access device 310 which directly register the fixed users 301 to controller 100 via the packet switching network 300'.

Also, in order to more intuitively understand the integration system of fixed network and mobile network, the typical procedure for a mobile user 201 calling a fixed user 301, as shown in Figure 5, is introduced secondly. The procedure is as follows:
We suppose the following fundamental condition:
   Mobile users 201 and fixed users 301 register to the domain controlled by the controller 100.
   The main working process of a mobile user 201 calling a fixed user 301 can be generally described as follows:
      Step 1, a mobile user 201 send a call to the control device 110 via the network device base station 220 and the base station controller 210 in the wireless access network 200, as well as the packet network 500;
      Step 2, after the control device 110 receives the call request established by the mobile user 201, it will analyze the called user and finds out the called is a fixed user 301 in the controlled domain, therefore, it sends a call request to the fixed user 301;
      Step 3, the fixed user 301 sends a call response to the control device 110;
      Step 4, after the control device 110 receives the call response from the fixed user 301, it will send a call response to the mobile user 201;
      Step 5, the mobile user 201 establishes a terminal-terminal carrying channel with the fixed user 301 via the network element device base station 220 and the base station controller 210;
      Step 6, the call between the mobile user 201 and the fixed user 301 is achieved;
      Step 7, after the communication between the mobile user 201 and the fixed user 301 is over, the call is released.

The principle of the present invention has been illustrated in detail in the above description, and several typical network structure procedures are offered. Yet they are only figurative examples for understanding, and are not intended to limit the scope ofthe present invention. The present invention may have many other embodiments, and the structure of the components can be modified without departing from the spirit and essence of the present invention. All these modifications should be covered by the claims appended hereto.

### Industrial Applicability

The switching system used in fixed and mobile communication networks can achieve the establishment of a call between a mobile user and a fixed user via a controller, and gets rid of the previous mode that a call can only be established by the interconnection between a mobile user and a fixed user. In addition, the integrated switching system applies a soft-switch technology in which carrying and controlling are separated. For the mobile users, all advantages of the former mobile network are remained, and for the fixed user, access can be realized at any time in any place since the access method supports the internet. The integrated system of the present invention does not only give users more convenience but also increase marketing competitiveness of the telecommunication operators.

## Claims

1. A switching system used in fixed and mobile communication networks, comprising a wired access network connected with fixed terminals and a wireless access network connected with wireless terminals, wherein, the system also comprises a controller for controlling establishment of achieving a call between users of said fixed terminals and users of said mobile terminals; in said wired access network, said fixed terminals register to said controller via a packet switching network, or directly connect to an integrated access device or access gateway device and then register to said controller via the packet switching network; in said wireless access network, said mobile terminals register to said controller via the wireless access network, or connect to the packet switching network by the manner of wireless access and then register to said controller via the packet switching network.

2. The switching system of claim 1, wherein, said controller comprises one or more control devices and at least one subscriber server, and said subscriber server connects with said control devices.

3. The switching system of claim 1 or claim 2, wherein, the system also comprises one or more gateway devices for carrying media streams, and said gateway devices connect with said controller, packet switching network and wireless access network respectively.

4. The switching system of claim 1 or claim 2, wherein said wireless access network comprises a base station controller and a base station, and said wireless terminals connect with said controller or said packet switching network through said base station and then said base station controller.

5. An implementing method of a switching system used in fixed and mobile communication networks, adaptive to a wired access network connected with fixed terminals and a wireless access network connected with wireless terminals, wherein, a controller is set for controlling establishment of achieving a call between users of said fixed terminals and users of said mobile terminals; said fixed terminals in said wired access network register to said controller via a packet switching network, or directly connect to an integrated access device or access gateway device and then register to said controller via the packet switching network; meanwhile, said mobile terminals in said wireless access network register to said controller via the wireless access network, or connect to the packet switching network by the manner of wireless access and then register to said controller via the packet switching network.

6. The method of claim 5, wherein one or more gateway devices are set for carrying media streams; and said gateway devices connect with said controller, packet switching network and wireless access network respectively.

7. The method of claim 6, further including the following steps of:
Step 1, sending a call to the wireless access network via a wireless interface from a user of mobile terminal, sending the call directly or indirectly via the packet switching network to said controller by the wireless access network after it receiving the call;
Step 2, analyzing the called user and determining the called is a fixed user in the network by said controller after it receiving the call request,;
Step 3, sending the call to the called via said wired access network by said controller to establish the call;
Step 4, sending a call response to the caller via said controller by the called;
Step 5, establishing a carrying channel between the caller and the called, or establishing a media stream with the called by the caller via the gateway devices;
Step 6, cutting the line by the caller or the called, then releasing the call.

8. The method of claim 6, further including the following steps of:
Step 1, sending a call to said controller via the wired access network by a user of the fixed terminal, or sending a call to the packet switching network via the integrated access device, then transferring the call via the packet switching network to said controller by the integrated access device after it receiving the call;
Step 2, analyzing the called and determining that the called is a mobile terminal user in the network by said controller after it receiving the call request;
Step 3, sending the call to the called via said wireless access network by said controller so as to establish the call;
Step 4, sending a call response to the caller via said controller by the called;
Step 5, establishing a carrying channel between the caller and the called, or establishing a media stream between the caller and the called via the gateway devices;
Step 6, cutting the line by the caller or the called, and releasing the call.
